# EUROPEAN PATENT SPECIFICATION

(11) **EP 4 465 595 B1**
(45) Date of publication and mention of the grant of the patent: **15.07.2026**
(21) Application number: 24174737.7
(22) Date of filing: 08.05.2024
(51) Int. Cl.: H04L 9/40, H04W 12/06, H04W 12/72

(54) **CAUSING AN AUTHENTICATION PROCEDURE BETWEEN MOBILE EQUIPMENT AND CORE NETWORK**
AUSLÖSUNG EINES AUTHENTIFIZIERUNGSVERFAHRENS ZWISCHEN EINEM MOBILEN GERÄT UND EINEM KERNNETZWERK
DÉCLENCHEMENT D'UNE PROCÉDURE D'AUTHENTIFICATION ENTRE UN ÉQUIPEMENT MOBILE ET UN RÉSEAU CENTRAL

(30) Priority: 15.05.2023 IN 202341034118
(43) Date of publication of application: 20.11.2024
(73) Proprietor: Nokia Technologies Oy, 02610 Espoo (FI)
(72) Inventor: KHARE, Saurabh, Bangalore (IN); WON, Sung Hwan, Flower Mound (US); MAVUREDDI DHANASEKARAN, Ranganathan, Munich (DE)
(74) Representative: Samson & Partner Patentanwälte mbB

(56) References cited:
- WO-A1-2022/215331
- ROLAND GRUBER ET AL: "Handling of SOR counter and the UE parameter update counter if stored in NVM", vol. 3GPP CT 1, no. Online; 20230417 - 20230421, 6 April 2023 (2023-04-06), XP052294479, Retrieved from the Internet <URL:https://www.3gpp.org/ftp/tsg_ct/WG1_mm-cc-sm_ex-CN1/TSGC1_141e/Docs/C1-232043.zip C1-232043_24501_SORCount_NVM_03.docx> [retrieved on 20230406]
- MIRKO CANO SOVERI ET AL: "LS on Handling of SOR counter and the UE parameter update counter if stored in NVM", vol. 3GPP SA 3, no. Berlin, DE; 20230522 - 20230526, 11 May 2023 (2023-05-11), XP052308448, Retrieved from the Internet <URL:https://www.3gpp.org/ftp/TSG_SA/WG3_Security/TSGS3_111_Berlin/Docs/S3-232312.zip S3-232312.docx> [retrieved on 20230511]

## Description

### Field

The present application relates to a method, apparatus, system and computer program and in particular but not exclusively to SoR and UPU counter storage in USIM and ME.

### Background

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless communication system at least a part of a communication session between at least two stations occurs over a wireless link. Examples of wireless systems comprise public land mobile networks (PLMN), satellite based communication systems and different wireless local networks, for example wireless local area networks (WLAN). Some wireless systems can be divided into cells, and are therefore often referred to as cellular systems.

A user can access the communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is Universal Mobile Telecommunications System (UMTS) Terrestrial Radio Access Network (UTRAN) (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP). Other examples of communication systems include 5G-Advanced (NR Rel-18 and beyond) and 6G.

WO 2022/215331 shows a method of a user equipment (UE), a method of an access and mobility management function (AMF), a method of a unified data management (UDM), a UE, an AMF and a UDM.

The subject-matter provided by the present invention is defined in independent claims, while preferred embodiments of the present invention are defined in dependent claims.

### Summary

In a first aspect there is provided an apparatus comprising means for determining, on insertion of a universal subscriber identity module, USIM, in a mobile equipment, that at least one counter stored at the mobile equipment is invalid and means for, based on the determining, providing an indication to a core network to cause an authentication procedure between the mobile equipment and the core network.

The USIM may comprise a first identifier stored thereon. The apparatus may comprise means for determining that the at least one counter is invalid based on the first identifier.

Means for determining that the at least one counter is invalid may comprise means for comparing the first identifier with a second identifier of the mobile equipment.

The first identifier may comprise a first permanent equipment identifier, PEI. The second identifier may comprise a second PEI.

A command to the mobile equipment from the USIM may trigger the mobile equipment to provide a message to the core network causing the authentication procedure.

The message may comprise a mobility management message.

The mobility management message may be a registration request message including a subscription concealed identifier, SUCI.

The mobility management message may include an indication of a PEI change.

The apparatus may comprise means for receiving a data packet comprising a value and means for determining that the at least one counter is invalid based on the received value.

Means for determining that the at least one counter is invalid may comprise means for comparing the received value with a value generated at the mobile equipment.

The received value may comprise a first message authentication code value. The generated value may comprise a second message authentication code value.

The indication to the core network may comprise an indication of an error condition associated with the data packet.

The data packet may comprise a steering of roaming packet or a user equipment parameter update packet and the apparatus may comprise means for receiving an indication from the core network to provide an acknowledgement for steering of roaming or user equipment parameter update packets having a message authentication code value which matches the message authentication code value generated at the mobile equipment.

A key may be derived in the mobile equipment during the authentication procedure and the mobile equipment may reset the at least one counter to zero upon deriving the key.

The at least one counter may be stored in a non-volatile memory of the mobile equipment.

The at least one counter comprises at least one of the following: a user equipment parameter update, UPU, counter and a steering of roaming, SOR, counter.

In a second aspect there is provided an apparatus comprising means for, at an entity of a core network, determining an indication from a mobile equipment to cause an authentication procedure between the mobile equipment and the core network and means for, based on the determining, causing the authentication procedure between the mobile equipment and the core network.

The indication to the core network may comprise an indication of an error condition associated with the data packet.

The indication to the core network may comprise an indication of an error condition associated with the data packet being not verifiable at the core network.

The entity may be a network function node for managing access to the core network or a network function node for unified data management.

The data packet may comprise a steering of roaming packet or a user equipment parameter update packet. The apparatus may comprise means for providing an indication from the core network to the mobile equipment to provide an acknowledgement for steering of roaming or user equipment parameter update packets having a message authentication code value which matches a message authentication code value generated at the mobile equipment and wherein determining an indication from a mobile equipment to cause a reauthentication procedure between the mobile equipment and the core network comprises means for determining that no acknowledgement of the data packet has been received after a given time period.

The entity may be a network function node for unified data management.

The indication may comprise a mobility management message.

The mobility management message may be a registration request message including a subscription concealed identifier, SUCI or includes an indication of a PEI change.

In a third aspect there is provided a method comprising determining, on insertion of a universal subscriber identity module, USIM, in a mobile equipment, that at least one counter stored at the mobile equipment is invalid and, based on the determining, providing an indication to a core network to cause an authentication procedure between the mobile equipment and the core network.

The USIM may comprise a first identifier stored thereon. The method may comprise determining that the at least one counter is invalid based on the first identifier.

Determining that the at least one counter is invalid may comprise comparing the first identifier with a second identifier of the mobile equipment.

The first identifier may comprise a first permanent equipment identifier, PEI. The second identifier may comprise a second PEI.

A command to the mobile equipment from the USIM may trigger the mobile equipment to provide a message to the core network causing the authentication procedure.

The message may comprise a mobility management message.

The mobility management message may be a registration request message including a subscription concealed identifier, SUCI.

The mobility management message may include an indication of a PEI change.

The method may comprise receiving a data packet comprising a value and determining that the at least one counter is invalid based on the received value.

Determining that the at least one counter is invalid may comprise comparing the received value with a value generated at the mobile equipment.

The received value may comprise a first message authentication code value. The generated value may comprise a second message authentication code value.

The indication to the core network may comprise an indication of an error condition associated with the data packet.

The data packet may comprise a steering of roaming packet or a user equipment parameter update packet. The method may comprise receiving an indication from the core network to provide an acknowledgement for steering of roaming or user equipment parameter update packets having a message authentication code value which matches the message authentication code value generated at the mobile equipment.

A key may be derived in the mobile equipment during the authentication procedure and the mobile equipment may reset the at least one counter to zero upon deriving the key.

The at least one counter may be stored in a non-volatile memory of the mobile equipment.

The at least one counter comprises at least one of the following: a user equipment parameter update, UPU, counter and a steering of roaming, SOR, counter.

In a fourth aspect there is provided a method comprising, at an entity of a core network, determining an indication from a mobile equipment to cause an authentication procedure between the mobile equipment and the core network and, based on the determining, causing the authentication procedure between the mobile equipment and the core network.

The indication to the core network may comprise an indication of an error condition associated with the data packet.

The indication to the core network may comprise an indication of an error condition associated with the data packet being not verifiable at the core network.

The entity may be a network function node for managing access to the core network or a network function node for unified data management.

The data packet may comprise a steering of roaming packet or a user equipment parameter update packet. The method may comprise providing an indication from the core network to the mobile equipment to provide an acknowledgement for steering of roaming or user equipment parameter update packets having a message authentication code value which matches a message authentication code value generated at the mobile equipment and wherein determining an indication from a mobile equipment to cause a reauthentication procedure between the mobile equipment and the core network comprises determining that no acknowledgement of the data packet has been received after a given time period.

The entity may be a network function node for unified data management.

The indication may comprise a mobility management message.

The mobility management message may be a registration request message including a subscription concealed identifier, SUCI or includes an indication of a PEI change.

In a fifth aspect there is provided a computer readable medium comprising instructions which, when executed by an apparatus, cause the apparatus to perform at least the following: determining, on insertion of a universal subscriber identity module, USIM, in a mobile equipment, that at least one counter stored at the mobile equipment is invalid and based on the determining, providing an indication to a core network to cause an authentication procedure between the mobile equipment and the core network.

The USIM may comprise a first identifier stored thereon. The apparatus may be caused to perform determining that the at least one counter is invalid based on the first identifier.

The apparatus may be caused to perform comparing the first identifier with a second identifier of the mobile equipment.

The first identifier may comprise a first permanent equipment identifier, PEI. The second identifier may comprise a second PEI.

A command to the mobile equipment from the USIM may trigger the mobile equipment to provide a message to the core network causing the authentication procedure.

The message may comprise a mobility management message.

The mobility management message may be a registration request message including a subscription concealed identifier, SUCI.

The mobility management message may include an indication of a PEI change.

The apparatus may be caused to perform receiving a data packet comprising a value and determining that the at least one counter is invalid based on the received value.

The apparatus may be caused to perform comparing the received value with a value generated at the mobile equipment.

The received value may comprise a first message authentication code value. The generated value may comprise a second message authentication code value.

The indication to the core network may comprise an indication of an error condition associated with the data packet.

The data packet may comprise a steering of roaming packet or a user equipment parameter update packet and the apparatus may be caused to perform receiving an indication from the core network to provide an acknowledgement for steering of roaming or user equipment parameter update packets having a message authentication code value which matches the message authentication code value generated at the mobile equipment.

A key may be derived in the mobile equipment during the authentication procedure and the mobile equipment may reset the at least one counter to zero upon deriving the key.

The at least one counter may be stored in a non-volatile memory of the mobile equipment.

The at least one counter comprises at least one of the following: a user equipment parameter update, UPU, counter and a steering of roaming, SOR, counter.

In a sixth aspect there is provided a computer readable medium comprising instructions which, when executed by an apparatus, cause the apparatus to perform at least the following at an entity of a core network, determining an indication from a mobile equipment to cause an authentication procedure between the mobile equipment and the core network and based on the determining, causing the authentication procedure between the mobile equipment and the core network.

The indication to the core network may comprise an indication of an error condition associated with the data packet.

The indication to the core network may comprise an indication of an error condition associated with the data packet being not verifiable at the core network.

The entity may be a network function node for managing access to the core network or a network function node for unified data management.

The data packet may comprises a steering of roaming packet or a user equipment parameter update packet. The apparatus may be caused to perform providing an indication from the core network to the mobile equipment to provide an acknowledgement for steering of roaming or user equipment parameter update packets having a message authentication code value which matches a message authentication code value generated at the mobile equipment and wherein determining an indication from a mobile equipment to cause a reauthentication procedure between the mobile equipment and the core network comprises determining that no acknowledgement of the data packet has been received after a given time period.

The entity may be a network function node for unified data management.

The indication may comprise a mobility management message.

The mobility management message may be a registration request message including a subscription concealed identifier, SUCI or includes an indication of a PEI change.

In a seventh aspect there is provided an apparatus, comprising at least one processor and at least one memory storing instructions that, when executed by the at least one processor, cause the apparatus at least to: determine, on insertion of a universal subscriber identity module, USIM, in a mobile equipment, that at least one counter stored at the mobile equipment is invalid and based on the determining, provide an indication to a core network to cause an authentication procedure between the mobile equipment and the core network.

The USIM may comprise a first identifier stored thereon. The apparatus may be caused to determine that the at least one counter is invalid based on the first identifier.

The apparatus may be caused to compare the first identifier with a second identifier of the mobile equipment.

The first identifier may comprise a first permanent equipment identifier, PEI. The second identifier may comprise a second PEI.

A command to the mobile equipment from the USIM may trigger the mobile equipment to provide a message to the core network causing the authentication procedure.

The message may comprise a mobility management message.

The mobility management message may be a registration request message including a subscription concealed identifier, SUCI.

The mobility management message may include an indication of a PEI change.

The apparatus may be caused to receive a data packet comprising a value and determining that the at least one counter is invalid based on the received value.

The apparatus may be caused to compare the received value with a value generated at the mobile equipment.

The received value may comprise a first message authentication code value. The generated value may comprise a second message authentication code value.

The indication to the core network may comprise an indication of an error condition associated with the data packet.

The data packet may comprise a steering of roaming packet or a user equipment parameter update packet and the apparatus may be caused to perform receiving an indication from the core network to provide an acknowledgement for steering of roaming or user equipment parameter update packets having a message authentication code value which matches the message authentication code value generated at the mobile equipment.

A key may be derived in the mobile equipment during the authentication procedure and the mobile equipment may reset the at least one counter to zero upon deriving the key.

The at least one counter may be stored in a non-volatile memory of the mobile equipment.

The at least one counter comprises at least one of the following: a user equipment parameter update, UPU, counter and a steering of roaming, SOR, counter.

In an eighth aspect there is provided an apparatus, comprising at least one processor and at least one memory storing instructions that, when executed by the at least one processor, cause the apparatus at least to: at an entity of a core network, determine an indication from a mobile equipment to cause an authentication procedure between the mobile equipment and the core network and based on the determining, cause the authentication procedure between the mobile equipment and the core network.

The indication to the core network may comprise an indication of an error condition associated with the data packet.

The indication to the core network may comprise an indication of an error condition associated with the data packet being not verifiable at the core network.

The entity may be a network function node for managing access to the core network or a network function node for unified data management.

The data packet may comprises a steering of roaming packet or a user equipment parameter update packet. The apparatus may be caused to provide an indication from the core network to the mobile equipment to provide an acknowledgement for steering of roaming or user equipment parameter update packets having a message authentication code value which matches a message authentication code value generated at the mobile equipment and wherein determining an indication from a mobile equipment to cause a reauthentication procedure between the mobile equipment and the core network comprises determining that no acknowledgement of the data packet has been received after a given time period.

The entity may be a network function node for unified data management.

The indication may comprise a mobility management message.

The mobility management message may be a registration request message including a subscription concealed identifier, SUCI or includes an indication of a PEI change.

In a ninth aspect there is provided a non-transitory computer readable medium comprising program instructions for causing an apparatus to perform at least the method according to the third or fourth aspect.

In the above, many different embodiments have been described. It should be appreciated that further embodiments may be provided by the combination of any two or more of the embodiments described above.

### Description of Figures

Embodiments will now be described, by way of example only, with reference to the accompanying Figures in which:
Figure 1 shows a schematic diagram of an example 5GS communication system;
Figure 2 shows a schematic diagram of an example mobile communication device;
Figure 3 shows a schematic diagram of an example control apparatus;
Figure 4 shows a schematic diagram of a UE;
Figure 5 shows a schematic diagram of key storage at a UE;
Figure 6 shows a schematic diagram of counter storage at a UE;
Figure 7 shows a signalling diagram for a scenario where a USIM is removed from a ME1 and inserted into ME2;
Figure 8 shows a flowchart of a method according to an example embodiment;
Figure 9 shows a flowchart of a method according to an example embodiment;
Figure 10 shows a signalling diagram according to an example embodiment;
Figure 11 shows a signalling diagram according to an example embodiment;
Figure 12 shows a signalling diagram according to an example embodiment;
Figure 13 shows a signalling diagram according to an example embodiment;
Figure 14 shows a signalling diagram according to an example embodiment.

### Detailed description

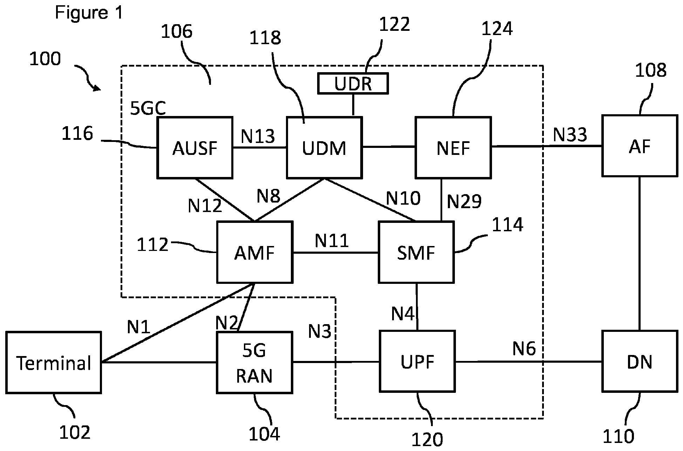

Before explaining in detail the examples, certain general principles of a wireless communication system and mobile communication devices are briefly explained with reference to Figure 1, Figure 2 and Figure 3 to assist in understanding the technology underlying the described examples.

An example of a suitable communications system is the 5G or NR concept. Network architecture in NR may be similar to that of LTE-advanced. Base stations of NR systems may be known as next generation NodeBs (gNBs). Changes to the network architecture may depend on the need to support various radio technologies and finer Quality of Service (QoS) support, and some on-demand requirements for e.g. QoS levels to support Quality of Experience (QoE) for a user. Also network aware services and applications, and service and application aware networks may bring changes to the architecture. Those are related to Information Centric Network (ICN) and User-Centric Content Delivery Network (UC-CDN) approaches. NR may use Multiple Input - Multiple Output (MIMO) antennas, many more base stations or nodes than the LTE (a so-called small cell concept), including macro sites operating in co-operation with smaller stations and perhaps also employing a variety of radio technologies for better coverage and enhanced data rates.

Future networks may utilise network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations to be carried out, at least partly, in a server, host or node operationally coupled to a remote radio head. It is also possible that node operations will be distributed among a plurality of servers, nodes or hosts. It should also be understood that the distribution of labour between core network operations and base station operations may differ from that of the LTE or even be non-existent.

Figure 1 shows a schematic representation of a 5G system (5GS) 100. The 5GS may comprise a user equipment (UE) 102 (which may also be referred to as a communication device or a terminal), a 5G radio access network (5GRAN) 104, a 5G core network (5GCN) 106, one or more internal or external application functions (AF) 108 and one or more data networks (DN) 110.

An example 5G core network (CN) comprises functional entities. The 5GCN 106 may comprise one or more Access and mobility Management Functions (AMF) 112, one or more session management functions (SMF) 114, an authentication server function (AUSF) 116, a Unified Data Management (UDM) 118, one or more user plane functions (UPF) 120, a Unified Data Repository (UDR) 122 and/or a Network Exposure Function (NEF) 124. The UPF is controlled by the SMF (Session Management Function) that receives policies from a PCF (Policy Control Function).

The CN is connected to a UE via the Radio Access Network (RAN). The 5GRAN may comprise one or more gNodeB (gNB) Distributed Unit(DU) functions connected to one or more gNodeB (gNB) Centralized Unit(CU) functions. The RAN may comprise one or more access nodes.

A User Plane Function (UPF) referred to as PDU Session Anchor (PSA) may be responsible for forwarding frames back and forth between the DN and the tunnels established over the 5G towards the UE(s) exchanging traffic with the DN.

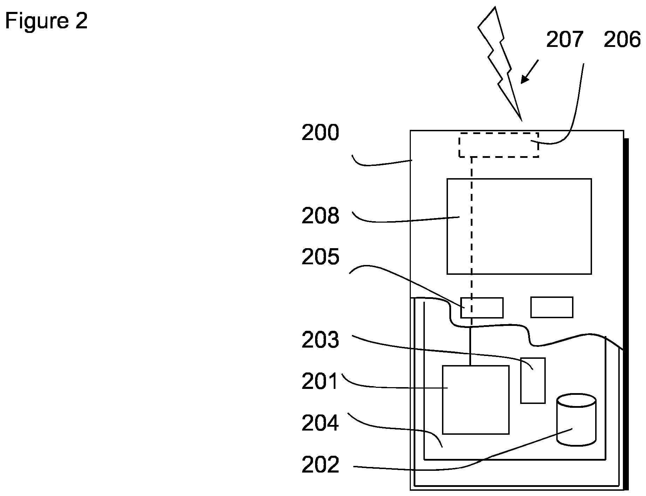

A possible mobile communication device will now be described in more detail with reference to Figure 2 showing a schematic, partially sectioned view of a communication device 200. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, voice over IP (VoIP) phones, portable computers, desktop computer, image capture terminal devices such as digital cameras, gaming terminal devices, music storage and playback appliances, vehiclemounted wireless terminal devices, wireless endpoints, mobile stations, laptop-embedded equipment (LEE), laptop-mounted equipment (LME), smart devices, wireless customerpremises equipment (CPE), or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts, and other information.

A mobile device is typically provided with at least one data processing entity 201, at least one memory 202 and other possible components 203 for use in software and hardware aided execution of tasks it is designed to perform, including control of access to and communications with access systems and other communication devices. The data processing, storage and other relevant components can be provided on an appropriate circuit board and/or in chipsets. This feature is denoted by reference 204. The user may control the operation of the mobile device by means of a suitable user interface such as key pad 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto.

The mobile device 200 may receive signals over an air or radio interface 207 via appropriate apparatus for receiving and may transmit signals via appropriate apparatus for transmitting radio signals. In Figure 2 transceiver apparatus is designated schematically by block 206. The transceiver apparatus 206 may be provided for example by means of a radio part and associated antenna arrangement. The antenna arrangement may be arranged internally or externally to the mobile device.

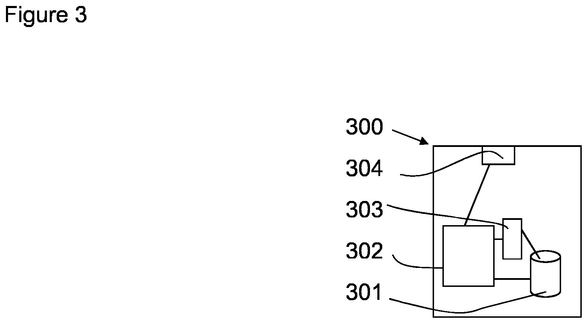

Figure 3 shows an example of a control apparatus 300 for a communication system, for example to be coupled to and/or for controlling a station of an access system, such as a RAN node, e.g. a base station, eNB or gNB, a relay node or a core network node such as an MME or Serving Gateway (S-GW) or Packet Data Network Gateway (P-GW), or a core network function such as AMF/SMF, or a server or host. The method may be implemented in a single control apparatus or across more than one control apparatus. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. In some embodiments, each base station may have such a control apparatus as well as a control apparatus being provided in a radio network controller. The control apparatus 300 can be arranged to provide control on communications in the service area of the system. The control apparatus 300 comprises at least one memory 301, at least one data processing unit 302, 303 and an input/output interface 304. Via the interface the control apparatus can be coupled to a receiver and a transmitter of the base station. The receiver and/or the transmitter may be implemented as a radio front end or a remote radio head.

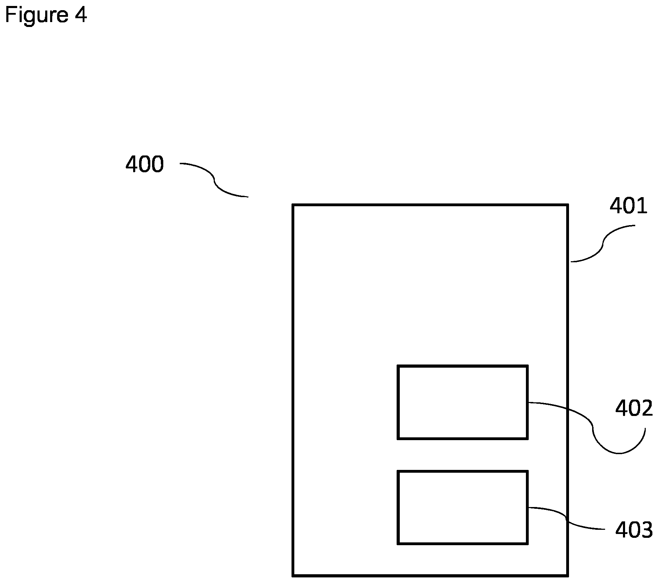

A user equipment may comprise a mobile equipment (ME) and a universal subscriber identity module (USIM) which is inserted in the ME. The ME may comprise a non-volatile memory (NVM). Figure 4 shows a block diagram of a UE 400 including a ME 401, a USIM 402 and a NVM 403.

The following 5G mobility management (5GMM parameters shall be stored on the USIM if the corresponding file is present: 5G-Globally Unique Temporary Identifier (GUTI), last visited registered Tracking Area Identifier (TAI), 5GS update status, 5G Non-Access Stratum (NAS) security context parameters from a full native 5G NAS security context, K_{AUSF} and K_{SEAF}, steering of roaming (SOR) counter; and UE parameter update (UPU) counter.

The UE may support multiple records of NAS security context storage for multiple registration. If the UE supports multiple records of NAS security context storage for multiple registration, the first 5G security context of one access shall be stored in record 1 of the 5G NAS Security Context USIM file for that access and the second 5G security context of that access shall be stored in record 2 of the same file. The presence and format of corresponding files on the USIM is specified in 3GPP standards.

If the corresponding file is not present on the USIM, these 5GMM parameters are stored in a non-volatile memory in the ME together with the SUPI from the USIM. These 5GMM parameters can only be used if the SUPI from the USIM matches the SUPI stored in the non-volatile memory; else the UE shall delete the 5GMM parameters.

The following 5GMM parameters shall be stored in a non-volatile memory in the ME together with the Subscription Permanent Identifier (SUPI) from the USIM, configured Network Slice Selection Assistance Information (NSSAI(s)), Network Slice Simultaneous Registration Group (NSSRG) information, NSSAI inclusion mode(s), Multimedia Priority Service (MPS) Indicator, Modulation and Coding Scheme (MCS) indicator, operator-defined access category definitions, network-assigned UE radio capability IDs, CAG information list" (if the UE supports CAG), signalled URSP, SOR-CMCI one or more lists of type "list of PLMN(s) to be used in disaster condition" (if the UE supports MINT), disaster roaming wait range, if the UE supports MINT, disaster return wait range, if the UE supports MINT, indication of whether disaster roaming is enabled in the UE and indication of 'applicability of "lists of Public Land Mobile Networks (PLMN(s)) to be used in disaster condition" provided by a visited PLMN (VPLMN)'.

The following 5GMM parameters should be stored in a non-volatile memory in the ME together with the SUPI from the USIM allowed NSSAI(s).

Each configured NSSAI consists of S-NSSAI(s) stored together with a PLMN identity, if it is associated with a PLMN. The UE shall store the S-NSSAI(s) of the HPLMN. If the UE is in the VPLMN, the UE shall also store the configured NSSAI for the current PLMN and any necessary mapped S-NSSAI(s). The configured NSSAI(s) can only be used if the SUPI from the USIM matches the SUPI stored in the non-volatile memory of the ME, otherwise the UE shall delete the configured NSSAI(s). A configured NSSAI may be associated with NSSRG information.

That is, parameters stored on USIM and/or on non-volatile memory (NVM) of the ME may comprise the following: SUPI, K_{AUSF}, SOR counter or UPU counter.

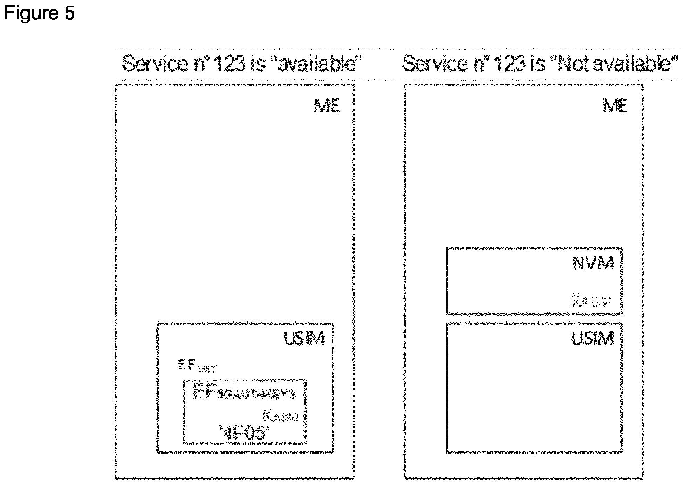

Figure 5 shows a schematic diagram of key storage on a UE. For K_{AUSF} key storage, if Service n°123 is "available" in EF_{UST} on the USIM, then the K_{AUSF} is stored in EF_{5GAUTHKEYS} on the USIM otherwise the K_{AUSF} is stored in non-volatile memory (NVM) of the ME.

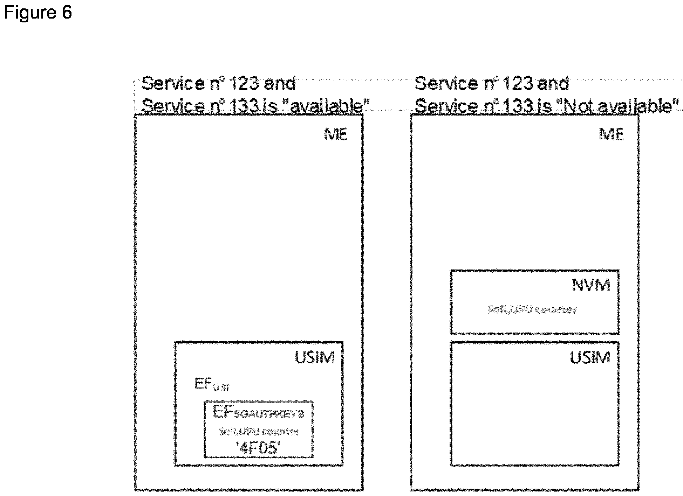

Figure 6 shows a schematic diagram of storage on a UE for SoR and UPU counters. If Service n°123 and Service n°133 are "available" in EF_{UST} on the USIM, then the SOR counter and the UE parameter update counter are stored in EF_{5GAUTHKEYS} on the USIM otherwise the SOR counter and the UE parameter update counter are stored in NVM of the ME.

If the K_{AUSF} is stored on the USIM and the SOR counter and the UE parameter update counter are not present on the USIM, then the SOR counter and the UE parameter update counter stored in NVM are considered as valid after power up, if the SUPI stored in NVM of the ME is equal to the SUPI of the inserted USIM.

However, the USIM could have been used in a different ME-2 in the meantime and a new authentication could have been triggered in the ME-2. In this case if the USIM is re-inserted in ME-1, ME-1 would apply the outdated previously stored counters, i.e., the counters stored in the NVM of ME-1 related to the previous K_{AUSF} might be higher than the counters used in the context of the new K_{AUSF}. In consequence new SOR messages would be ignored due to outdated counter values store in NVM of ME-1.

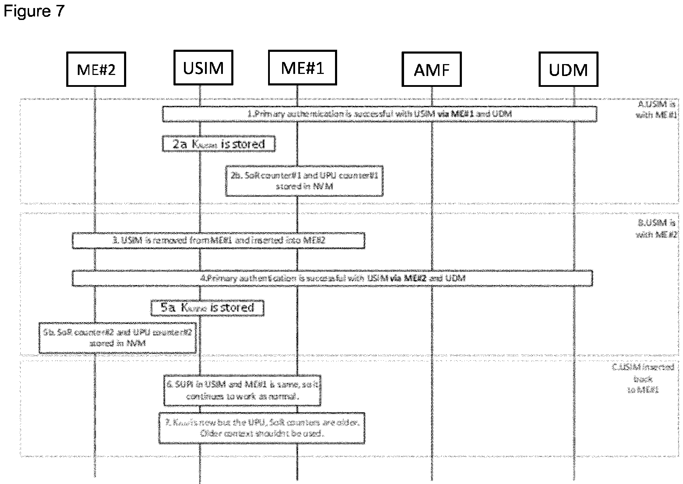

Figure 7 shows a signaling diagram of a scenario where a USIM is reinserted in ME-1 after being inserted in ME-2.

In part A, the USIM is inserted in ME#1.

In step 1, primary authentication is successful with USIM via ME#1 and UDM.

In step 2a, K_{AUSF#1} is stored at the USIM.

In step 2b, SoR counter#1 and UPU counter#1 is stored in the NVM of ME#1.

In part B, the USIM is inserted in ME#2.

In step 3, the USIM is removed from ME#1 and inserted into ME#2.

In step 4, primary authentication is successful with USIM via ME#2 and UDM.

In step 5a, a new key K_{AUSF#2} is stored in USIM.

In step 5b, SoR counter#2 and UPU counter#2 is stored in NVM of ME#2.

In part C, the USIM is reinserted into ME#1.

In step 6, the SUPI on USIM and ME#1 is the same so it continues to work as normal. However, in step 7, K_{AUSF} is new but the UPU and SoR counters are older and the older context shouldn't be used.

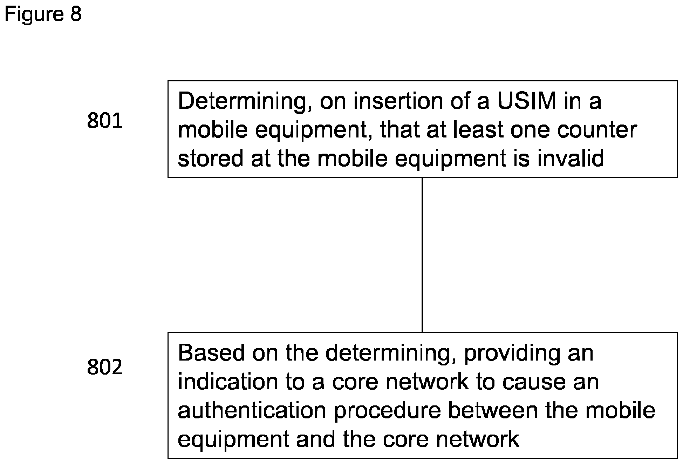

Figure 8 shows a flowchart of a method according to an example embodiment. The method may be performed at UE such as that described with reference to Figure 2. The UE may be a mobile equipment comprising a USIM. The method may be performed at e.g., the USIM of the UE.

In 801, the method comprises determining, on insertion of a USIM in a mobile equipment, that at least one counter stored at the mobile equipment is invalid.

In 802, the method comprises, based on the determining, providing an indication to a core network to cause an authentication procedure between the mobile equipment and the core network.

The at least one counter may be stored in a non-volatile memory of the mobile equipment. The at least one counter may be a SoR or UPU counter.

A key (e.g., new K_{AUSF}) may derived in the mobile equipment (and the core network) during the authentication procedure and the mobile equipment may reset the at least one counter to zero upon deriving the key.

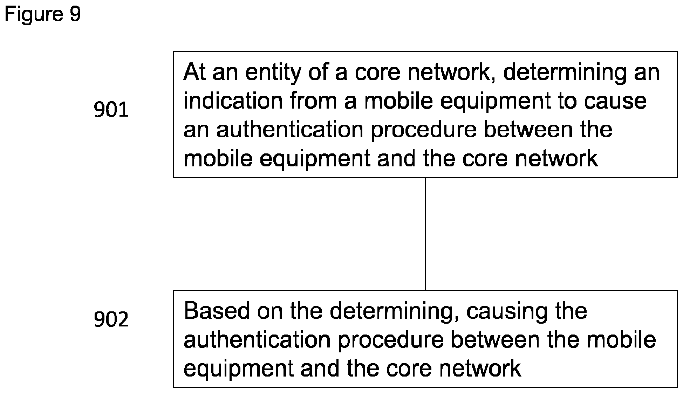

Figure 9 shows a flowchart of a method according to an example embodiment. The method may be performed at an entity of a core network. The entity may be a network function node for managing access to the core network (e.g., an AMF) or a network function node for unified data management (e.g., a UDM). The entity may comprise a control apparatus as described with reference to Figure 3.

In 901, the method comprises at an entity of a core network, determining an indication from a mobile equipment to cause an authentication procedure between the mobile equipment and the core network.

In 902, the method comprises based on the determining, causing the authentication procedure between the mobile equipment and the core network.

The indication to the core network may comprise an indication of an error condition associated with the data packet.

The indication to the core network comprises an indication of an error condition associated with the data packet being not verifiable at the core network.

The USIM, may comprise a first identifier stored thereon and the method may comprise determining that the at least one counter is invalid based on the first identifier. The first identifier may be a first PEI. The first identifier may be referred to below as PEI#2.

The first identifier may be associated with the mobile equipment in which the USIM was previously inserted

Determining that the counter is invalid may comprise comparing the first identifier with a second identifier of the mobile equipment. The second identifier may be a second PEI. The second identifier may be stored in the NVM of the UE. The second identifier may be referred to as PEI#1 in example below.

A command to the mobile equipment from the USIM may trigger the mobile equipment to provide a message to the core network causing the authentication procedure. The message may comprise a mobility management message.

The mobility management message may be a registration request message including a subscription concealed identifier, SUCI or include an indication of a PEI change.

In a first example embodiment, a stored PEI#2 from USIM and PEI#1 from ME#1 is verified along with SUPI. This is an example of determining that the counter stored at the user equipment is invalid based on the first identifier and of comparing the first identifier with a second identifier of the mobile equipment.

SUPI check will pass as the SUPI is same, but the PEI check will fail. In this example embodiment, the USIM triggers a REFRESH command to ME. This triggers a registration request with SUCI. As the registration request is with SUCI, it reaches UDM and triggers authentication for USIM in ME#1. This is an example of a command to the mobile equipment from the USIM triggering the mobile equipment to provide a message to the core network causing the authentication procedure, wherein the message is a MM message comprising a SUCI..

In a second example embodiment, when the PEI check fails, the USIM informs the PEI failure results to ME. In this example embodiment, the ME triggers a 5GMM status message with new 5GMM cause as PEI change. This is an example of a command to the mobile equipment from the USIM triggering the mobile equipment to provide a message to the core network causing the authentication procedure, wherein the message is a MM message and includes an indication of a PEI change..

AMF may use the UDM service to trigger re-authentication.

The method may comprise receiving a data packet comprising a value and means for determining that the at least one counter is invalid based on the received value. The received value may be a first message authentication code (MAC) value. Determining that the at least one counter is invalid may comprise comparing the received value with a value generated at the mobile equipment. The generated value may be a second MAC value. The data packet me a SOR or UPU packet.

For example, when a UE receives a SoR packet, the UE generates message authentication code SoR-MAC-I_{AUSF} and it is mismatched with the received MAC value due to counter mismatch. The UE sends an error message indication to AMF. Based on this error message, AMF performs the reauthentication. Alternatively, the UE may send an error message indication to AMF and AMF sends the ACK to UDM. Based on this error message, UDM starts reauthentication, e.g., UDM will ask AMF to starts the reauthentication.

In this example, the indication to the core network comprises an indication of an error condition associated with the data packet.

The indication to the core network may comprises an indication of an error condition associated with the data packet being not verifiable at the core network.

For example, if the SoR-MAC-I_{AUSF} verification fails due to any reason, the UE may generate an ACK with an error indication. The UE may includes the generated SoR-MAC-I_{UE} in a SOR transparent container in the Registration Complete message. If UDM receives an ACK with error indication or received SoR-MAC-I_{UE} is not matching with the expected SoR-XMAC-I_{UE} (this is an example of an indication of an error condition associated with the data packet not being not verifiable at the core network), UDM may initiate the authentication procedure

Alternatively, UE may ignore the SoR packet. If UDM does not receives an acknowledgement within a configured time, UDM starts reauthentication, e.g., UDM will ask AMF to starts the reauthentication. For this, UDM may retry sending SoR packet again before starting the reauthentication. This is an example of determining that no acknowledgement of the data packet has been received after a given time period.

The data packet may be a SOR packet or a UPU packet and the method may comprise providing an indication from the core network to the mobile equipment to provide an acknowledgement for steering of roaming or user equipment parameter update packets having a message authentication code value which matches a message authentication code value generated at the mobile equipment. For example, a UDM forces Ack for all SoR/UPU message, and when ACK is not received, UDM starts reauthentication on its own.

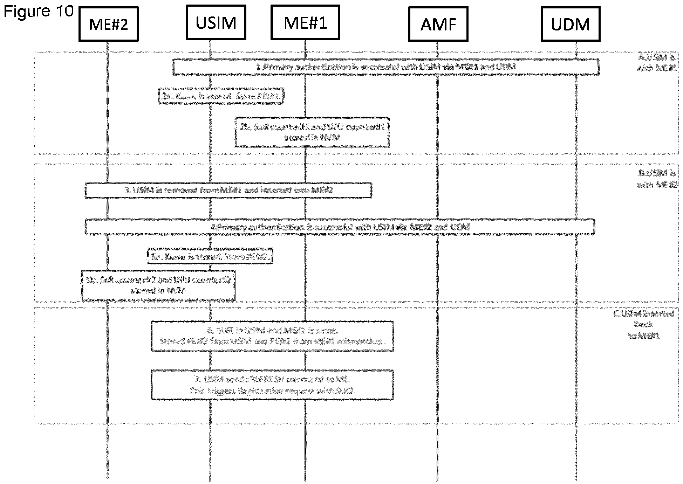

Figure 10 shows a signaling diagram according to an example embodiment.

The steps of Figure 9 are as shown in Figure 7 but in step 2a, PE#1 is stored in the USIM. PEI#1 may be used for later comparison.

In step 5a, PEI#2 is stored in the USIM.

In step 6, SUPI in USIM and ME#1 are the same but the stored PEI#2 and PEI#1 from ME#1 mismatches. SUPI check will pass as it is same, but the PEI check will fail.

In step 7, the USIM sends a REFRESH command to ME. This triggers a registration request with SUCI. As registration request is with SUCI, it reach UDM and it triggers fresh authentication for USIM in ME#1. As part of the authentication procedure, a new K_{AUSF} is derived by ME#1 and AUSF. Since K_{AUSF} is changed, the counters in ME#1 are deleted. This is an example of the mobile equipment resetting the at least one counter to zero upon deriving the key.

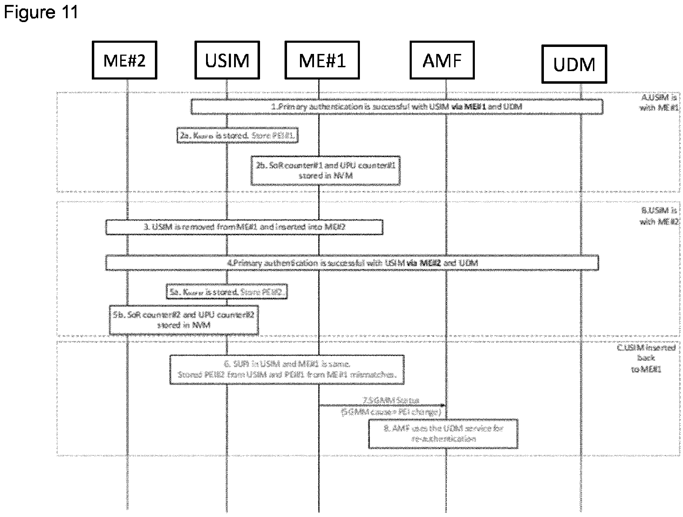

Figure 11 shows a signaling diagram according to an example embodiment.

Steps 1 to 6 are as shown in Figure 10.

In step 7, the USIM informs the PEI failure results to ME. The ME triggers 5GMM status message with new 5GMM cause as PEI change.

In step 8, the AMF uses the new UDM service to trigger re-authentication.

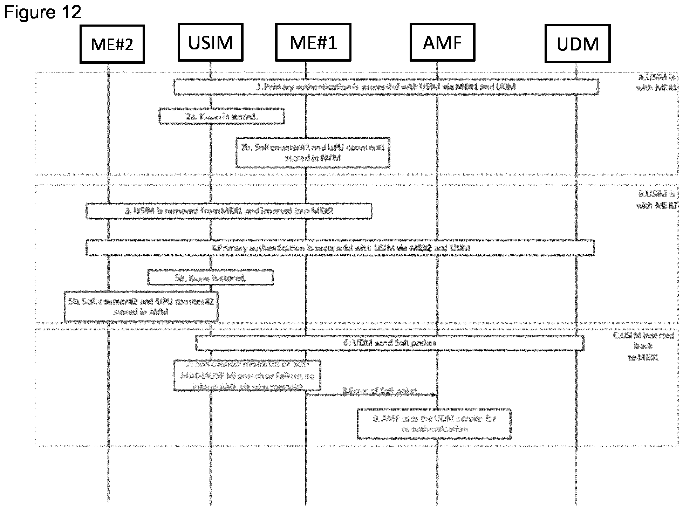

Figure 12 shows a signaling diagram according to an example embodiment.

Steps 1 to 5 are as shown in Figure 7.

When UE receives a SoR packet in step 6, the UE generates SoR-MAC-I_{AUSF} and it is mismatched with the received MAC value due to SoR counter mismatch. The UE sends an error message indication to AMF in step 7 and 8. Based on this error message, AMF performs the reauthentication in step 9.

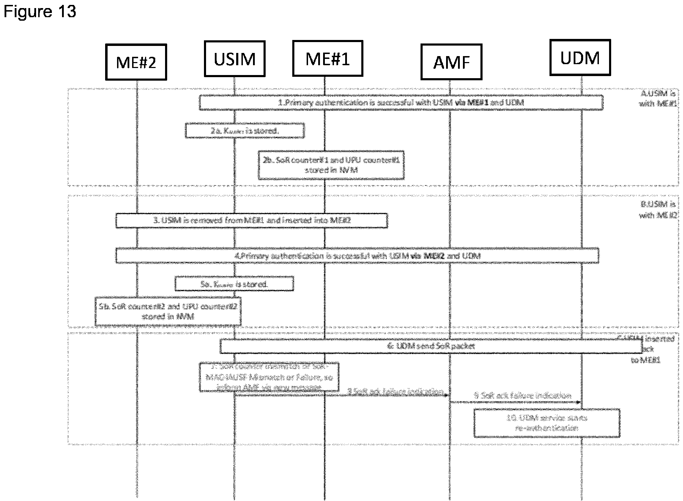

Figure 13 shows a signaling diagram according to an example embodiment.

Steps 1 to 5 are as shown in Figure 7.

When UE receives a SoR packet in step 6, the UE generates SoR-MAC-lausf and it is mismatched with the received MAC value due to counter mismatch. The UE sends an error message indication to AMF and AMF sends the ACK to UDM. Based on this error message, UDM starts reauthentication, i.e. UDM will ask AMF to starts the reauthentication.

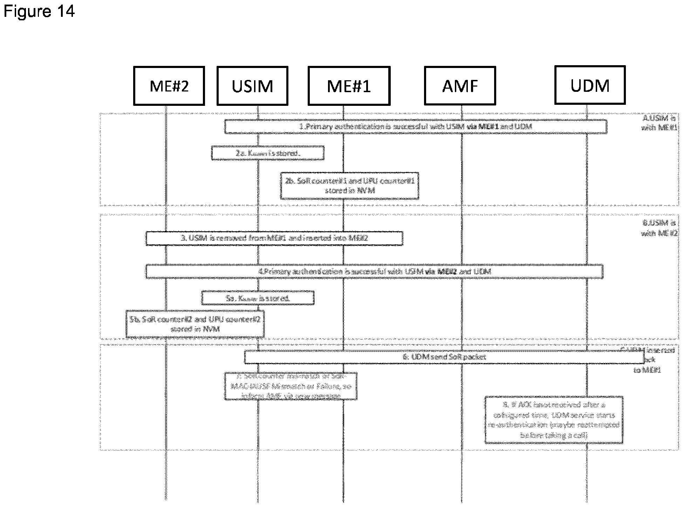

Figure 14 shows a signaling diagram according to an example embodiment.

Steps 1 to 5 are as shown in Figure 7.

When UE receives a SoR packet in step 6, the UE generates SoR-MAC-I_{AUSF} and it is mismatched with the received MAC value due to counter mismatch. The UE ignores the SoR packet. If UDM does not receives an ack within a configured time (e.g. the given time), UDM starts reauthentication.e.g., UDM will ask AMF to starts the reauthentication. For this, UDM may retry sending SoR packet again before starting the reauthentication.

The examples described above are applicable not only for SoR counter but also for UPU counters also.

An apparatus may comprise means for determining, on insertion of a universal subscriber identity module, USIM, in a mobile equipment, that at least one counter stored at the mobile equipment is invalid and means for, based on the determining, providing an indication to a core network to cause an authentication procedure between the mobile equipment and the core network.

The apparatus may comprise a user equipment, such as a mobile phone, be the user equipment or be comprised in the user equipment or a chipset for performing at least some actions of/for the user equipment.

Alternatively, or in addition, an apparatus may comprise means for, at an entity of a core network, determining an indication from a mobile equipment to cause an authentication procedure between the mobile equipment and the core network; and means for, based on the determining, causing the authentication procedure between the mobile equipment and the core network.

The apparatus may comprise a control apparatus, be the control apparatus or be comprised in the control apparatus or a chipset for performing at least some actions of/for the control apparatus.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems such as 6G networks or 5G-Advanced networks. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
   I hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware.

The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media. The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. Indeed, there is a further embodiment comprising a combination of one or more embodiments with any of the other embodiments previously discussed.

## Claims

1. A mobile equipment (401) comprising:
means for determining, on insertion of a universal subscriber identity module, USIM, (402) in the mobile equipment (401), that at least one counter stored at the mobile equipment (401) is invalid; and
means for, based on the determining, providing an indication to a core network (106) to cause an authentication procedure between the mobile equipment (401) and the core network (106)
wherein the USIM (402) comprises a first identifier stored thereon and the mobile equipment (401) comprises means for determining that the at least one counter is invalid based on the first identifier; and wherein the mobile equipment (401) is configured to be triggered by a command from the USIM (402) to the mobile equipment (401) to provide a message to the core network (106) causing the authentication procedure.

2. The mobile equipment (401) according to claim 1, wherein the means for determining that the at least one counter is invalid comprises means for comparing the first identifier with a second identifier of the mobile equipment (401).

3. The mobile equipment (401) according to claim 1 or claim 2, wherein the first identifier comprises a first permanent equipment identifier, PEI, and the second identifier comprises a second PEI.

4. The mobile equipment (401) according to claim 1, wherein the message comprises a mobility management message.

5. The mobile equipment (401) according to claim 4, wherein the mobility management message is a registration request message including a subscription concealed identifier, SUCI.

6. The mobile equipment (401) according to claim 4 or claim 5, wherein the mobility management message includes an indication of a PEI change.

7. The mobile equipment (401) according to claim 1, comprising means for receiving a data packet comprising a value and means for determining that the at least one counter is invalid based on the received value.

8. The mobile equipment (401) according to claim 7, wherein means for determining that the at least one counter is invalid comprises means for comparing the received value with a value generated at the mobile equipment (401).

9. The mobile equipment (401) according to claim 7 or claim 8, wherein the received value comprises a first message authentication code value and the generated value comprise a second message authentication code value.

10. The mobile equipment (401) according to any of claims 1 to 9 being configured to
- derive a key during the authentication procedure and
- reset the at least one counter to zero upon deriving the key.

11. The mobile equipment (401) according to any of claims 1 to 10, wherein the at least one counter is stored in a non-volatile memory of the mobile equipment (401).

12. The mobile equipment (401) according to any of claims 1 to 11, wherein the at least one counter comprises at least one of the following: a user equipment parameter update, UPU, counter and a steering of roaming, SOR, counter.

13. A method comprising:
determining (801), on insertion of a universal subscriber identity module, USIM, (402) in a mobile equipment (401), that at least one counter stored at the mobile equipment (401) is invalid;
based on the determining, providing (802) an indication to a core network (106) to cause an authentication procedure between the mobile equipment (401) and the core network (106), wherein the USIM (402) comprises a first identifier stored thereon and the method comprises determining that the at least one counter is invalid based on the first identifier;
triggering by a command from the USIM (402) to the mobile equipment (401) to provide a message to the core network (106) causing the authentication procedure.

14. The method according to claim 13, wherein the determining that the at least one counter is invalid comprises comparing the first identifier with a second identifier of the mobile equipment (401).

15. The method according to claim 13 or 14, comprising receiving a data packet comprising a value and determining that the at least one counter is invalid based on the received value.

16. The method according to claim 15, wherein the determining that the at least one counter is invalid comprises comparing the received value with a value generated at the mobile equipment (401).

17. The method according to any of claims 13 to 16, comprising
- deriving a key during the authentication procedure and
- resetting the at least one counter to zero upon deriving the key.

18. The method according to any of claims 13 to 17, comprising storing the at least one counter in a non-volatile memory of the mobile equipment.

## Patentansprüche

1. Mobilgerät (401), umfassend:
Mittel zum Bestimmen, beim Einsetzen eines universellen Teilnehmeridentitätsmoduls, USIM, (402) in das Mobilgerät (401), dass mindestens ein im Mobilgerät (401) gespeicherter Zähler ungültig ist; und
Mittel zum, basierend auf dem Bestimmen, Bereitstellen einer Angabe an ein Kernnetz (106), um eine Authentifizierungsprozedur zwischen dem Mobilgerät (401) und dem Kernnetz (106) zu veranlassen,
wobei das USIM (402) eine erste darauf gespeicherte Kennung umfasst und das Mobilgerät (401) Mittel zum Bestimmen, dass der mindestens eine Zähler ungültig ist, basierend auf der ersten Kennung umfasst; und wobei das Mobilgerät (401) konfiguriert ist, durch einen Befehl vom USIM (402) an das Mobilgerät (401) ausgelöst zu werden, um eine Nachricht an das Kernnetz (106) bereitzustellen, die die Authentifizierungsprozedur veranlasst.

2. Mobilgerät (401) nach Anspruch 1, wobei die Mittel zum Bestimmen, dass der mindestens eine Zähler ungültig ist, Mittel zum Vergleichen der ersten Kennung mit einer zweiten Kennung des Mobilgeräts (401) umfassen.

3. Mobilgerät (401) nach Anspruch 1 oder Anspruch 2, wobei die erste Kennung eine erste permanente Gerätekennung, PEI, umfasst und die zweite Kennung eine zweite PEI umfasst.

4. Mobilgerät (401) nach Anspruch 1, wobei die Nachricht eine Mobilitätsverwaltungsnachricht umfasst.

5. Mobilgerät (401) nach Anspruch 4, wobei die Mobilitätsverwaltungsnachricht eine Registrierungsanforderungsnachricht ist, die eine verborgene Teilnehmerkennung, SUCI, umfasst.

6. Mobilgerät (401) nach Anspruch 4 oder Anspruch 5, wobei die Mobilitätsverwaltungsnachricht eine Angabe einer PEI-Änderung umfasst.

7. Mobilgerät (401) nach Anspruch 1, umfassend Mittel zum Empfangen eines Datenpakets, das einen Wert umfasst, und Mittel zum Bestimmen, dass der mindestens eine Zähler ungültig ist, basierend auf dem empfangenen Wert.

8. Mobilgerät (401) nach Anspruch 7, wobei die Mittel zum Bestimmen, dass der mindestens eine Zähler ungültig ist, Mittel zum Vergleichen des empfangenen Werts mit einem im Mobilgerät (401) erzeugten Wert umfassen.

9. Mobilgerät (401) nach Anspruch 7 oder Anspruch 8, wobei der empfangene Wert einen ersten Nachrichtenauthentifizierungscodewert umfasst und der erzeugte Wert einen zweiten Nachrichtenauthentifizierungscodewert umfasst.

10. Mobilgerät (401) nach einem der Ansprüche 1 bis 9, das konfiguriert ist zum
- Ableiten eines Schlüssels während der Authentifizierungsprozedur und
- Zurücksetzen des mindestens einen Zählers auf Null beim Ableiten des Schlüssels.

11. Mobilgerät (401) nach einem der Ansprüche 1 bis 10, wobei der mindestens eine Zähler in einem nichtflüchtigen Speicher des Mobilgeräts (401) gespeichert ist.

12. Mobilgerät (401) nach einem der Ansprüche 1 bis 11, wobei der mindestens eine Zähler mindestens eines der Folgenden umfasst: eine Benutzergerätparameteraktualisierung, UPU, Zähler und einen Roaming-Steuerungs-, SOR, Zähler.

13. Verfahren, umfassend:
Bestimmen (801), beim Einsetzen eines universellen Teilnehmeridentitätsmoduls, USIM, (402) in ein Mobilgerät (401), dass mindestens ein im Mobilgerät (401) gespeicherter Zähler ungültig ist;
basierend auf dem Bestimmen, Bereitstellen (802) einer Angabe an ein Kernnetz (106), um eine Authentifizierungsprozedur zwischen dem Mobilgerät (401) und dem Kernnetz (106) zu veranlassen,
wobei das USIM (402) eine erste darauf gespeicherte Kennung umfasst und das Verfahren das Bestimmen umfasst, dass der mindestens eine Zähler ungültig ist, basierend auf der ersten Kennung;
Auslösen durch einen Befehl vom USIM (402) an das Mobilgerät (401), um eine Nachricht an das Kernnetz (106) bereitzustellen, die die Authentifizierungsprozedur veranlasst.

14. Verfahren nach Anspruch 13, wobei das Bestimmen, dass der mindestens eine Zähler ungültig ist, das Vergleichen der ersten Kennung mit einer zweiten Kennung des Mobilgeräts (401) umfasst.

15. Verfahren nach Anspruch 13 oder 14, umfassend das Empfangen eines Datenpakets, das einen Wert umfasst, und das Bestimmen, dass der mindestens eine Zähler ungültig ist, basierend auf dem empfangenen Wert.

16. Verfahren nach Anspruch 15, wobei das Bestimmen, dass der mindestens eine Zähler ungültig ist, das Vergleichen des empfangenen Werts mit einem im Mobilgerät (401) erzeugten Wert umfasst.

17. Verfahren nach einem der Ansprüche 13 bis 16, umfassend
- Ableiten eines Schlüssels während der Authentifizierungsprozedur und
- Zurücksetzen des mindestens einen Zählers auf Null beim Ableiten des Schlüssels.

18. Verfahren nach einem der Ansprüche 13 bis 17, umfassend das Speichern des mindestens einen Zählers in einem nichtflüchtigen Speicher des Mobilgeräts.

## Revendications

1. Équipement mobile (401) comprenant :
des moyens pour déterminer, lors de l'insertion d'un module universel d'identification d'abonné, USIM, (402) dans l'équipement mobile (401), qu'au moins un compteur stocké au niveau de l'équipement mobile (401) est invalide ; et
des moyens pour, sur la base de la détermination, fournir une indication à un réseau cœur (106) pour provoquer une procédure d'authentification entre l'équipement mobile (401) et le réseau cœur (106)
dans lequel l'USIM (402) comprend un premier identifiant stocké sur celui-ci et l'équipement mobile (401) comprend des moyens pour déterminer que l'au moins un compteur est invalide sur la base du premier identifiant ; et dans lequel l'équipement mobile (401) est configuré pour être déclenché par une commande de l'USIM (402) à l'équipement mobile (401) pour fournir un message au réseau cœur (106) provoquant la procédure d'authentification.

2. Équipement mobile (401) selon la revendication 1, dans lequel les moyens pour déterminer que l'au moins un compteur est invalide comprennent des moyens pour comparer le premier identifiant avec un second identifiant de l'équipement mobile (401).

3. Équipement mobile (401) selon la revendication 1 ou la revendication 2, dans lequel le premier identifiant comprend un premier identifiant permanent d'équipement, PEI, et le second identifiant comprend un second PEI.

4. Équipement mobile (401) selon la revendication 1, dans lequel le message comprend un message de gestion de mobilité.

5. Équipement mobile (401) selon la revendication 4, dans lequel le message de gestion de mobilité est un message de demande d'enregistrement comprenant un identifiant dissimulé d'abonnement, SUCI.

6. Équipement mobile (401) selon la revendication 4 ou la revendication 5, dans lequel le message de gestion de mobilité comprend une indication d'un changement de PEI.

7. Équipement mobile (401) selon la revendication 1, comprenant des moyens pour recevoir un paquet de données comprenant une valeur et des moyens pour déterminer que l'au moins un compteur est invalide sur la base de la valeur reçue.

8. Équipement mobile (401) selon la revendication 7, dans lequel les moyens pour déterminer que l'au moins un compteur est invalide comprennent des moyens pour comparer la valeur reçue avec une valeur générée au niveau de l'équipement mobile (401).

9. Équipement mobile (401) selon la revendication 7 ou la revendication 8, dans lequel la valeur reçue comprend une première valeur de code d'authentification de message et la valeur générée comprise un second valeur de code d'authentification de message.

10. Équipement mobile (401) selon l'une quelconque des revendications 1 à 9 étant configuré pour
- dériver une clé pendant la procédure d'authentification et
- réinitialiser l'au moins un compteur à zéro lors de la dérivation de la clé.

11. Équipement mobile (401) selon l'une quelconque des revendications 1 à 10, dans lequel l'au moins un compteur est stocké dans une mémoire non volatile de l'équipement mobile (401).

12. Équipement mobile (401) selon l'une quelconque des revendications 1 à 11, dans lequel l'au moins un compteur comprend au moins l'un parmi les suivants : une mise à jour de paramètres d'équipement utilisateur, UPU, compteur et un compteur de pilotage d'itinérance, SOR, compteur.

13. Procédé comprenant :
la détermination (801), lors de l'insertion d'un module universel d'identification d'abonné, USIM, (402) dans un équipement mobile (401), qu'au moins un compteur stocké au niveau de l'équipement mobile (401) est invalide ;
sur la base de la détermination, la fourniture (802) d'une indication à un réseau cœur (106) pour provoquer une procédure d'authentification entre l'équipement mobile (401) et le réseau cœur (106),
dans lequel l'USIM (402) comprend un premier identifiant stocké sur celui-ci et le procédé comprend la détermination que l'au moins un compteur est invalide sur la base du premier identifiant ;
le déclenchement par une commande de l'USIM (402) à l'équipement mobile (401) pour fournir un message au réseau cœur (106) provoquant la procédure d'authentification.

14. Procédé selon la revendication 13, dans lequel la détermination que l'au moins un compteur est invalide comprend la comparaison du premier identifiant avec un second identifiant de l'équipement mobile (401).

15. Procédé selon la revendication 13 ou 14, comprenant la réception d'un paquet de données comprenant une valeur et la détermination que l'au moins un compteur est invalide sur la base de la valeur reçue.

16. Procédé selon la revendication 15, dans lequel la détermination que l'au moins un compteur est invalide comprend la comparaison de la valeur reçue avec une valeur générée au niveau de l'équipement mobile (401).

17. Procédé selon l'une quelconque des revendications 13 à 16, comprenant
- la dérivation d'une clé pendant la procédure d'authentification et
- la réinitialisation de l'au moins un compteur à zéro lors de la dérivation de la clé.

18. Procédé selon l'une quelconque des revendications 13 à 17, comprenant le stockage de l'au moins un compteur dans une mémoire non volatile de l'équipement mobile.
